# EUROPEAN PATENT SPECIFICATION

(11) **EP 1 577 741 B1**
(45) Date of publication and mention of the grant of the patent: **17.10.2007**
(21) Application number: 04005776.2
(22) Date of filing: 11.03.2004
(51) Int. Cl.: G06F 3/023, G06F 3/033

(54) **Dynamic assigning of functions to an input unit**
Dynamische Zuweisung von Funktionen zu einer Eingabeeinheit
Affectation dynamique de fonctions à une unité d'entrée

(43) Date of publication of application: 21.09.2005
(73) Proprietor: Sony Ericsson Mobile Communications AB, 221 88 Lund (SE)
(72) Inventor: Thoresson, Johan, 413 24 Göteborg (SE)
(74) Representative: Dahnér, Christer

(56) References cited:
- EP-A- 0 946 028
- EP-A- 1 033 644
- EP-A- 1 115 082

## Description

### TECHNICAL FIELD OF THE INVENTION

The present invention relates to a method, a portable electronic device, a computer program product and a computer program element for enabling assigning of one or more state functions to a user input unit.

### DESCRIPTION OF RELATED ART

As the number of functions in portable electronic devices increase more and more functions and/or applications will be located deeper down in menu trees. Shortcuts are therefore created which give faster access to selected functions for the user of the portable electronic device. These devices which typically are some type of mobile phone, are therefore often equipped with shortcuts that are typically chosen by using the user input unit of the mobile phone. These shortcuts are either manufacturer defined or can be defined by the user. Said shortcuts are created to give fast access to functions relevant to the user. Now, as various events occur the functions relevant to the user changes. A shortcut that was relevant at one time can be regarded as irrelevant after a short time only.

There is thus a need to overcome the issue of shortcuts becoming less relevant.

From EP 1 033 644 A2 it is known an application launcher for a two-way mobile communication device, which document further comprises methods and apparatuses that enable the mobile communication device to easily and efficiently activate or launch resident applications by pressing assigned keys or buttons on a keypad of the mobile communication device. Navigation key assignments can be pre-programmed and loaded at power-up, or determined dynamically according to the currently resident applications. Moreover, the key assignments are user customizable, i.e. can be changed by the users to meet their individual needs.

Document EP 1 115 082 A2 discloses a portable barcode printer with control and display for function keys and more particularly to such a printer having a small number of function keys each actuable in a plurality of modes to select a plurality of non-data entry functions and a display to provide a message and icon set to indicate the selectable function of a key in a current mode and monitoring information.

Patent document EP 0 946 028 A2 presents portable phone having a display, input means for inputting information and instructions to a control unit in the phone, where the control unit controls the display in dependence on the operation of the input means, and wherein said input means includes means for moving a marker in the display, and means for providing a request to the control unit for displaying operations which are allowed in a position defined by said marker, where said control unit generates a pop-up window which covers a part of the display upon reception of the request, and which includes said allowed operations. The processor detects state change events and changes accordingly the state of the phone and the display text. whereby the state change event can be a keypad entry (user event) or the reception of a call or SMS, a change in battery or antenna condition etc. (non user event). A group of preset functions associated with the state can be performed or accessed by means of the navigation and selection key.

### SUMMARY OF THE INVENTION

The invention is thus directed toward solving the problem of providing shortcuts of a portable electronic device when it is relevant to reach their related functions.

This is achieved by detecting an event causing a change of the state of a portable electronic device and assigning functions that are releted to the event to a user input unit.

A first object of the present invention is to provide a method enabling fast access to state relevant functions of a portable electronic device, according to claim 1.

A second object of the present invention is to provide a portable electronic device arranged to enable fast access to state relevant functions of a portable electronic device, as defined by claim 8.

A third object of the present invention is to provide a computer program element, which enables fast access to state relevant functions of a portable electronic device, as defined by claim 13.

A fourth object of the present invention is to provide a computer program product, which enable fast access to state relevant functions of a portable electronic device, as defined by claim 14.

The present invention has the following advantages:

The present invention provides fast access to functions to the user which are related to the events occurring, thus presenting shortcuts of momentary relevance.

Another advantageous property of the present invention is that relevant information and functions are quickly and conveniently accessible from, for instance, a joystick.

A further avantage is that a visual information presentation unit, for example of the type of a display shows which functions are accessible by manouvering a joystick in a certain direction.

A further advantage is that the access to the state related functions is dynamic and that the access can be automatically deleted upon choosing said access.

### BRIEF DESCRIPTION OF THE DRAWINGS

The present invention will now be described in more detail in relation to the enclosed drawings, in which:
fig. 1 presents a method for enabling dynamic assigning of one or more state related functions to a first user input unit of a portable electronic device, according to a preferred embodiment of the present invention;
fig. 2 is a schematic representation of a portable electronic device for enabling dynamic assigning of one or more state related functions to a first user input unit, according to a preferred embodiment of the present invention;
fig. 3 is a front view of a portable electronic for enabling dynamic assigning of one or more state related functions to a first user input unit, according to a preferred embodiment of the present invention;
fig. 4 shows a computer program product for enabling dynamic assigning of one or more application related functions to a first user input unit of a portable electronic device, according to a preferred embodiment of the present invention; and
figs. 5A and 5B presents accessible shortcuts of a user input unit on a visual information presentation unit, in a first and second state, respectively, of a portable electronic device.

### DETAILED DESCRIPTION OF THE EMBODIMENTS

It should be mentioned at this stage that portable electronic devices such as mobile phone of the state of the art, are often equipped with shortcuts, that is various functions being assigned to user input units and made available to the user in a standby state of the device. In this state of the device, only predefined shortcuts are thus available to the user of the device and hence the functions associated to the shortcuts.

The present invention concerns providing dynamic assignments of at least a user input unit of a portable electronic device. This dynamic assignment is dependent of an event that has occurred and reflects the state of the device, after having detected the event. Thus a new shortcut is created to access a function that is related to the state of the device.

A detailed description of a method and a device of the present invention will be described below.

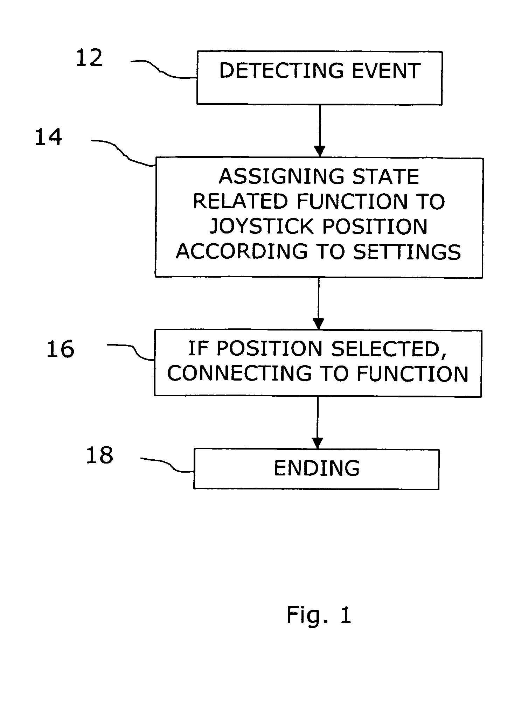

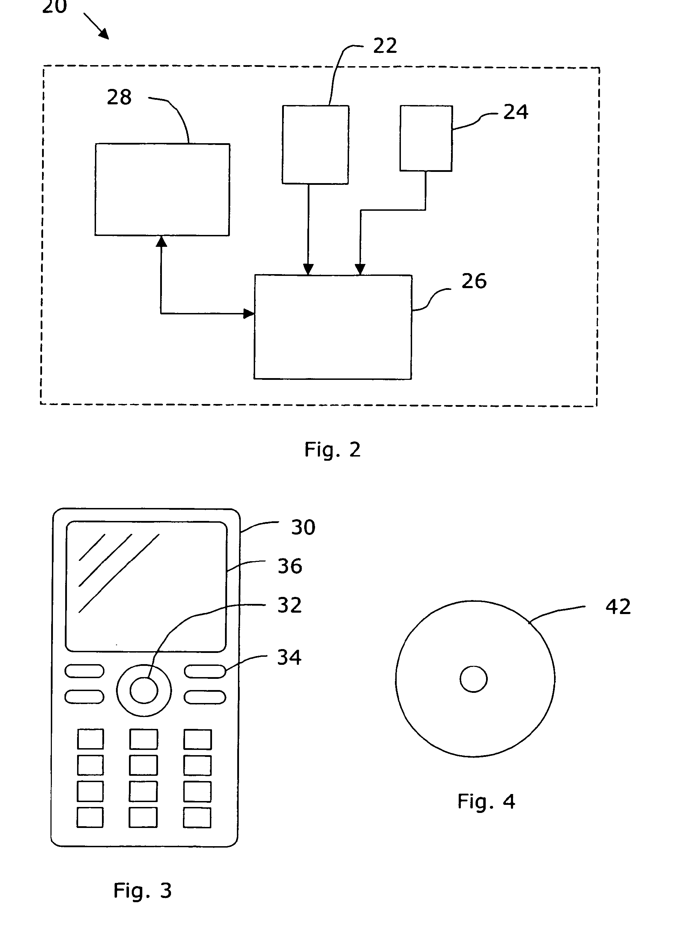

A method for enabling assigning of one or more state related functions to a user input unit of a portable electronic device is presented in fig. 1 and will be explained below with reference given to figs. 2 and 3. The portable electronic device 20 in fig. 2, comprises a first user input unit 22 and another user input unit 24. These two user input units 22,24 can be any type of switch, button or manouverable unit to be operated by the user of the device 20. However, according to a preferred embodiment of the present invention, the first user input unit 22 is a joystick and the other user input unit 24 is a menu button. The portable electronic device 20 further includes a control unit 26, which is connected to the the joystick 22 and the menu button 24, in a preferred embodiment of the present invention. The portable electronic device 20 is also equipped with a visual information presentation unit 28, which unit is also under the control of the control unit 26 and is hence connected to it.

The portable electronic device 30 as presented in fig. 3 comprises a joystick 32 as an example of the first user input unit and a menu button, 34, as an example of another user input unit. Also, the portable electronic device 30 comprises a visual information presentation unit 36 and other buttons contained in the key pad of the device in fig. 3. In a preferred embodiment this visual information presentation unit is a display 36.

As will be explained below dependent on occurring events, event related functions will be accessible by using a dynamic fast path, a so called dynamic shortcut. These fast paths or shortcuts are created and are assigned to the different positions of a joystick, and will be available to the user of a portable electronic device 20,30 such as a mobile phone, in the standby mode of the device.

Moreover the fast paths or shortcuts are dynamic by being dependent on one or more events of the mobile phone 20,30. For instance, upon detecting arriving an SMS message, a shortcut is created and is provided to the user to enable him or her to, for example, read the new SMS. The provided shortcut becomes accessible in the standy mode of the mobile phone 20,30 and do not interfere with other applications in a non-standby mode of the mobile phone 20,30. Although the dynamic shortcuts are accessible in the standby mode, other functions than the dynamic shortcut related functions can still be initiated in the standby mode of the mobile phone 20,30 by using, for instance, the menu key, a key pad or even a joystick, as described further below.

The method for enabling dynamic assigning of one or more state related functions to a first user input unit 22,32 of a portable electronic device 20,30 according to a preferred embodiment of the present invention starts by the step of detecting an event causing a state change of the portable electronic device 20,30,step 12. As above, in a preferred embodiment of the present invention, the portable electronic device 20,30 is a mobile phone. In other embodiments however the portable electronic device 20,30 may be any type of portable electronic device 20,30 for instance, a palm top or a personal digital assistant (PDA), etc. Detecting an event causing a state change is for instance detecting the event of receiving a new MMS message or the event that a time marker in the Calendar application is being passed.

After the step of detecting the event step 12, the control unit 26 of the mobile phone 20,30 performs the step of assigning a function, that is related to the event, to a joystick position according to priority settings, step 14.

If, the control unit 26, for example detects the event of receiving an SMS message, a state counter, here "new SMS" is incremented by 1, and a function related to the new state of mobile phone is assigned to, for instance, one joystick direction, according to one embodiment of the present invention.

The user is thus not limited to act upon an event that has occurred, but can initiate othere functions as well in this state of detected event.

Which function to be assigned to which joystick direction is specified in priority settings. One example of such priority settings is displayed in Table 1, shown below. As mentioned above the control unit 26 allows another function to be initiated by activating other user input units 24,34, such as the menu button, or even the same unit, i.e. the joystick, in this state.

**TABLE 1**

| **SHORTCUT FUNCTION PRIORITIES** | | | | **MOBILE PHONE STATE** | **FUNCTION** |
|---|---|---|---|---|---|
| ← | ↑ | → | ↓ | | |
| 1 | | | | IF (NEW SMS) > 1 | GO TO FILTERED VIEW OF INBOX SHOWING UNREAD MESSAGES ONLY |
| 2 | | | | IF (NEW SMS) = 1 | OPEN THE NEW MESSAGE |
| 3 | | | | IF (NEW SMS) = 0 | OPEN FUNCTION "WRITE NEW" |
| ... | ... | ... | ... | ... | ... |
| | | | 1 | IF (MISSED CALLS) > 1 | GO TO FILTERED VIEW OF "CALLS LIST" SHOWING MISSED CALLS ONLY |
| | | | 2 | IF (MISSED CALLS) = 1 | CALL MISSED CALL NUMBER |
| | | | 3 | IF (MISSED CALLS) = 0 | OPEN FUNCTION "PHONEBOOK" |

Table 1 lists examples of which functions are prioritized over other functions, dependent of the state of the mobile phone.

In case the state counter "new SMS" = 0, there are no new SMS received, and the function assigned to the joystick is hence a default function. The default shortcut, joystick left, opens the function "write new" SMS.

Upon detecting receiving a new SMS, the state counter "new SMS" is incremented by 1, and "new SMS" =1. In this state of the device, the function related to the joystick left, is updated from "write SMS" to the function "opening the new message". As can be seen in Table 1, the function "open the new message" has a higher priority and is hence prioritized over the function open the function "write new".

Upon detecting another new SMS, while not having read the previously received new SMS, the counter is incremented by one and the state "new SMS" > 1, is reached, the function "go to filtered view of the inbox showing unread messags only" have priroity over the function "open the new message", as the priority equals 1 for the state in which the state counter "new SMS " >1, whereas the priority equals 2, for the state in which the state counter "new SMS" =1, according to Table 1, as displayed above.

In Table 1 another state counter "missed calls" is included and the corresponding function of the joystick is dependent on the value of this counter being 0, 1 or >1. If the state counter "missed calls" = 0, that is no calls are missed, the function of the joystick position visualized in Table 1, i.e. joystick down, is open function "phonebook". This function is the default function of this joystick direction, that is the function that is assigned the joystick without having detected any missed calls events. If the user misses one call, the state counter is incremented by 1, and the "missed calls" = 1, the joystick direction down is assigned the function "call missed call number".

If the user misses a second call, without having called the phone number related to the first missed call, the state counter "missed calls" is incremented by 1 to the state "missed calls > 1". In this stage the joystick direction down is assigned the function of "go to filtered view of "calls list" showing missed calls only", as can be seen in Table 1.

According to one embodiment of the present invention, a variety of state counters can be created and included in the priority settings. Such counters can include "new MMS" and "missed meeting" to mention a few. These state counters are incremented upon detecting events related to the state counters and prioritized functions may be assigned to the joystick directions in a way similar to what is described above for the state counters "new SMS" and "missed calls".

According to a preferred embodiment of the present invention, the user input unit, that is assigned various functions dependent on the state of the mobile phone, is a joystick. A joystick may have a number of directions or positions which all, irrespective to one another can be assigned new functions, again dependent on the events occurred. Joysticks are typically operable in five directions, up, down, left, right and center press. Moreover, joysticks may be designed to have more directions such as press up, press down, press left, press right to mention a few or even be manouverable in other directions such as along a diagonal in between two perpendicular directions, for instance. Further, movements of the joystick may be assigned a function, for instance moving the joystick from the up-direction in a circular motion to the right-direction, without passing the default position of the joystick. There are hence many different plausible directions, positions or movements of a joystick, which may be assigned a shortcut function.

As mentioned above, in case of an event of passing a time marker related to, for instance, a Calendar application, functions related to the Calendar may be assigned to various joystick directions.

In an alternative embodiment time marks are used in connection to applications different from the state related applications described above, in order to enable assigning functions of additional time dependent events. Such an event is typically connected to an alarm application, but can be any type of time dependent event.

In a different embodiment of the present invention the profile of a user may be dependent on the time. During working hours various settings are job-related, whereas during non-working hours the priority settings are family or sports related. These functions may be viewing favourite pictures, visiting interesting websites, choosing alarm tunes and adjusting output sound volume of the mobile phone, etc.

According to a preferred embodiment of the present invention the priority settings further comprise information on different time marks and the corresponding state related functions that are assigned to the chosen joystick positions.

Table 2, displayed below, presents one example of priority settings related information containing further time dependencies of the assignments of functions to a joystick position. For instance, after the event that time has passed 15 minutes before To, where To for example denotes a scheduled meeting start, the function "read current meeting agenda" is assigned a certain joystick direction, here joystick down. After the meeting has begun (T₀) and before or at the time the meeting is finished (T₁), (T₀ ≤ T ≤ T₁) the same joystick direction is assigned the function "add notes" to the meeting. As time (T) goes by, the event of reaching the time T₂ - 15, will occur. From this point in time and until the time has reached T₂, (T₂ - 15 ≤ T < T₂), the joystick direction is assigned the function "view survey for next meeting", according to one embodiment of the present invention.

**Table 2**

| CALENDAR | | | |
|---|---|---|---|
| | | TIME MARK | FUNCTION |
| Time depend. | √ | T₀ -15 ≤ T < T₀ | Read current meeting agenda |
| | | T₀ ≤ T ≤ T₁ | Add notes |
| | | T₂ - 15 ≤ T < T₂ | View survey for next meeting |
| | | ..... | ..... |

Many more time dependencies of assignments of functions can be visualized.

It is up to the Other events are for instance receiving an E-mail per se or receiving a meeting appointment by E-mail, etc. These events are easily supported by including the functions related to the events in the priority settings, as shown above in Tables 1 and 2.

Fast paths or shortcuts can thus easily be created to access state related functions by including these states and the pertinent related functions in the priority settings as described above.

As events occur for which there are defied shortcut paths in the priority settings, visual information is presented on the visual information presentation unit 28,36, according to a preferred embodiment of the present invention. In this preferred embodiment of the present invention the visual information presentation unit is a display 36 of the mobile phone 20,30.

Visual information presenting for instance which functions are assigned to which joystick directions, may be presented to the user on the display in the default state of the mobile phone. According to a preferred embodiment of the present invention, visual information of the functions that are assigned to which joystick directions in a non-default state is presented on the display. However, this information may be turned off in order to avoid interference between this visual information and other visual objects or information presented on the display. Also, shortcut information presented visually on the display of the mobile phone may be turned off in order to avoid making the functionality too obvious.

The visual information to be presented on the display 28,36 can be either an icon, a text label or both, with which help an understanding of the function assigned to the respective shortcut can be obtained.

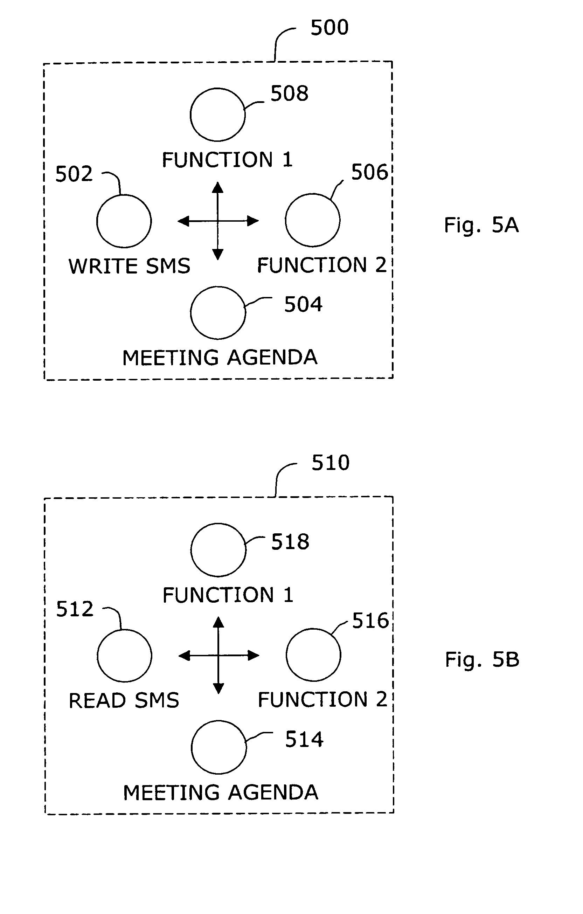

Fig. 5A presents schematically visual information on a display 500, as one type of visual information presentation unit, in the default state of the mobile phone. As no events have occurred, the joystick left direction is for instance assigned the function "write SMS" 502. Joystick down is assigned the function "meeting agenda" 504. Two more functions can be accessed by using default shortcuts of the joystick by directing the jostick up and to the right, and thus executing "function 1" and "function 2", respectively.

Fig. 5B however presents the visual information on a display 510 in a non-default state. Upon detecting an event receiving a new SMS, the state counter "new SMS" is incremented by 1, and joystick left is assigned a functionality "read SMS" 512, the shortcut function "write SMS" is then abandonned for the the function "read SMS", which is function that the user is supposed to prioritize over the default function. It should be noted that functions assigned to other joystick directions, such as the ones from the default state of the mobile phone, may be presented together with the reassigned function. As can be seen in fig. 5B, the functionality assigned to joystick up 518, right 516, and down 514, are consequently the same as in fig. 5A, relevant to the default state of the mobile phone.

It should be emphasized that the function that is reassigned to a joystick direction upon detecting an event, is a function that the user is supposed to prioritize in the new non-default state, as compared to the function that was assigned to the joystick direction in the default state. Relevant information and functions are thus quickly and conveniently accessible to the user by manouvering a user input unit, such as a joystick.

Returning to the method as schematically presented in fig. 1, for enabling dynamic assigning of one or more state related functions to a first user input unit 22,32 of a portable electronic device 20,30 after having performed assigning a state related function to a joystick position according to priority settings, step 14, the step of connecting to the function, if the position is selected, step 16 follows. If the user of the mobile phone 20,30 thus selects the joystick position for which the shortcut is assigned, the function to which the shortcut leads will be accessed.

In the state of having received an SMS or an MMS message, the respective shortcut is maintained as long as there are messages that are unread or unviewed by the user. After all such messages have been read, viewed or deleted, the shortcut and the visual information indicating its existence on the screen are automatically deleted, as the pertinent state counters are changed. The deletion of created shortcuts is controlled by the control unit 206, having access to message information containing whether there are unread or unviewed messages or not.

Subsequent to the step of connecting to function step 16, the step of ending the shortcut method, step 108, is followed.

The control unit is preferably provided in the form of a processor with associated program memory containing program code for performing the different method steps. This program code can also be provided in the form of a computer program product.

Fig. 4 presents such a computer program product in the form of a CD disc 42 according to a preferred embodiment of the present invention, which CD disc 42 contains computer program code means. In order to enable the mobile phone 20,30 performing the method according to the present invention, the CD disc 42 can be loaded in a computer, to make the computer read the computer program code means of the CD disc 42, and the computer program code means transferred from the computer to the mobile phone by infrared or Bluetooth techniques or by using a cable between them.

It should be realized that the program code may be provided on a server and downloaded into the phone 20,30.

The method according to the present invention is preferably enabled in the standby mode of the mobile phone 20,30 that is generally the start up mode, before selection of application has been detected. In one embodiment of the present invention the shortcuts are however created irrespective of the mode of the mobile phone 20,30 but they are only accessible from the standby mode of the mobile phone. In a non-standby mode, that is in an application mode, functions other than potential dynamic shortcuts have priority to the different joystick positions. As soon as a certain application has been chosen, the dynamic shortcuts are disabled. These other applications can be chosen by using the menu key 24,34, other buttons included in the key pad for instance, or even the joystick.

The functions which have been assigned a joystick position, can also be accessed by navigating using other user input units 24,34 such as the menu button or possibly the keypad. By using these other user input units 24,34 the function is accessed following a path different from the fast path or shortcut.

The priority settings, Tables 1 and 2, define which function to be assigned to which joystick position, upon detecting th epertinent event. If however no such event has occurred, while still having defined various functions within the priority settings, the joystick 22,32 will be given its original deafult meaning, compare Fig. 5A. In the standby mode of the mobile phone 20,30 this means that the joystick 22,32 will be given its original shortcut meanings. As soon as one event has occurred, to which state there is a dynamic shortcut according to Tables 1 and 2, a state related function will be assigned the joystick position. The original shortcut and a state related shortcut that is dependent on the priority settings, may however access the same function when choosing said joystick position.

It is emphasized that this invention can be varied in many more ways, of which the alternative embodiments below only are examples of a few. These different embodiments are hence non-limiting examples. The scope of the present invention, however, is only limited by the subsequently following claims.

According to another embodiment of the present invention, it is the state of the device which is detected. It is thus upon the state, that the state related functions are dynamically assigned to a user input unit of the device. According to this embodiment, it is hence the state as such that is determined and with respect to which the functions are dynamically assigned to the user input unit, that is, the shortcuts are created.

According to another embodiment of the present invention, the life time of one or more dynamic shortcut can be set. This means that once a state has grown too old the dynamic shortcut created to access its related function is automatically deleted and the visual information 502,504,506,508, 512, 514, 516, 518 indicating the existence of the dynamic shortcut on the display 28,36,500, 510 is erased.

According to yet another embodiment of the present invention a variety of further time dependent shortcuts may be created. These shortcuts can for instance relate the function of dialling different phone numbers, displaying different "to-do lists", different memos, other "do not forgets" etc., dependent of the time of the day, for instance.

According to still another embodiment of the present invention the computer program product is provided in the form of a memory stick, a USB-memory or any kind of portable electronic memory. This computer program code means can be made available to the device, such as the mobile phone, by plugging the memory stick, the USB-memory or another kind of memory into the mobile phone.

According to still yet another embodiment of the present invention the computer program product is provided as a DVD disc, a mini disc, a magneto-optical disc or a portable hard disc. Such computer program products may be loaded in a computer to make the computer read computer program code means related to the invention. This program code means may further be utilized to make a device, such as a mobile phone, perform the method according to the present invention, when transferred from the computer to the mobile phone by infrared or Bluetooth techniques or by using a cable between them.

### The present invention has the following advantages:

The present invention provides fast access to functions to the user which are related to the events occurring, thus presenting shortcuts of momentary relevance.

Another advantageous property of the present invention is that relevant information and functions are quickly and conveniently accessible from, for instance, the joystick 22,32.

A further avantage is that a visual information presentation unit, for example of the type of a display 28,36,50, shows which functions are accessible by manouvering the joystick 22,32 in a certain direction.

A further advantage is that the access to the state related functions is dynamic and that the access can be automatically deleted upon choosing said access.

## Claims

1. A method for enabling dynamic assigning of one or more state related functions to a first user input unit (22,32) of a portable electronic device (20,30), comprising the steps:
- detecting an event causing a state change of the device (20,30,step 12), and
- assigning one or more state related functions to the first user input unit (22,32),
such that the state related functions can be accessed via the first user input unit (22, 32), while still allowing the user of the device (20,30) to initiate other functions to be performed by using at least one user input unit (24,34).
**characterized in that**,
the step of assigning comprises automatically assigning one or more state related functions to the first user input unit (22,32) in dependence of priority settings (step 14), said priority settings defining which functions are prioritized over other functions, dependent of the state of the device,
such that according to said priority settings the automatically assigned state related functions can be accessed via the first user input unit (22, 32).

2. The method according to claim 1, wherein the step of assigning (step 14) further includes automatically assigning one or more state related functions to one or more selectable positions of the first user input unit (22,32).

3. The method according to claims 1 or 2, wherein the state related functions are accessible by using one or more selectable positions of the first user input unit (22,32) in a standby mode of the portable electronic device (20,30).

4. The method according to any one of claims 1 to 3, wherein the step of detecting a device generated event, includes detecting a device generated event causing a first state change, and further including detecting one more event of the same type, causing a second state change, if no state changing actions related to the state related function, were detected between the two detected events.

5. The method according to any one of claims 1 to 4, in which said priority settings can be customized, personalized or manufacturer defined.

6. The method according to any one of claims 1 to 5, wherein the first user input unit is a joystick and further including the step of connecting to the function that is assigned a joystick direction (step 16), if positioning the joystick in said direction.

7. The method according to any one of claims 1 to 6, further including the step of removing the assignment of the state related function to the first user input unit after a certain predefined time.

8. A portable electronic device (20,30) arranged to enable dynamic assigning of one or more state related functions to at least a first user input unit (22,32) of the portable electronic device (20,30), comprising:
- a set of user input units including the first user input unit (22,32),
- a control unit (26), connected to at least the first user input unit (22,32),
where the control unit (26) is arranged to detect an event causing a state change of the device (20,30) and to assign one or more state related functions to the first user input unit (22,32), such that the state related functions can be accessed via the first user input unit (22,32), while still allowing the user of the device (20,30) to initiate other functions to be performed by using at least one user input unit (24,34) of said set of user input units,
**characterized in that**
the control unit of the portable electronic device is arranged to automatically assign one or more state related functions to the first user input unit (22,32), in dependence of priority settings,
such that according to said priority settings the automatically assigned state related functions can be accessed via the first user input unit (22,32).

9. Portable electronic device (20,30) according to claim 8, in which the first user input unit (20,30) has multiple selectable positions, to which each can be assigned at least one state related function.

10. Portable electronic device (20,30) according to claims 8 or 9, in which the first user input unit (22,32) is a navigation key.

11. Portable electronic device (20,30) according to claim 10, in which the navigation key is a joystick (22,32).

12. Portable electronic device (20,30) according to any one of claim 8-11, wherein the portable electronic device is a mobile phone (30).

13. Computer program element comprising computer program code to make a computer or a device (20,30) execute, when said computer program code is loaded in the computer or the device (20,30), the steps of the method according to any of claims 1-7.

14. Computer program product (42) comprising a computer readable medium, having thereon:
computer program code means, to make a computer or a device (20,30) execute,
when said program code means is loaded in the computer or the device (20,30), the steps of the method according to any of claims 1-7.

## Patentansprüche

1. Verfahren zum Ermöglichen dynamischer Zuweisung einer oder mehrerer zustandsbezogener Funktionen zu einer ersten Benutzereingabeeinheit (22, 32) einer tragbaren elektronischen Vorrichtung (20, 30), aufweisend die Schritte:
- Erfassen eines Ereignisses, das eine Zustandsänderung der Vorrichtung (20, 30, Schritt 12) bewirkt, und
- Zuweisen einer oder mehrerer zustandsbezogener Funktionen zu der ersten Benutzereingabeeinheit (22, 32),
derart, dass auf die zustandsbezogenen Funktionen mithilfe der ersten Benutzereingabeeinheit (22, 32) zugegriffen werden kann, während dem Benutzer der Vorrichtung (22, 32) immer noch möglich ist, andere Funktionen zu initiieren, die mithilfe zumindest einer Benutzereingabeeinheit (24, 34) auszuführen sind,
**dadurch gekennzeichnet, dass**
der Zuweisungsschritt automatisches Zuweisen einer oder mehrerer zustandsbezogener Funktionen zu der ersten Benutzereingabeeinheit (22, 32) in Abhängigkeit von Prioritätseinstellungen (Schritt 14) aufweist, wobei die Prioritätseinstellungen abhängig von dem Zustand der Vorrichtung definieren, welche Funktionen vor anderen Funktionen Priorität besitzen,
derart, dass entsprechend der Prioritätseinstellungen auf die automatisch zugeordneten, zustandsbezogenen Funktionen mithilfe der ersten Benutzereingabeeinheit (22, 32) zugegriffen werden kann.

2. Verfahren nach Anspruch 1, wobei der Zuweisungsschritt (Schritt 14) ferner ein automatisches Zuweisen einer oder mehrerer zustandsbezogener Funktionen zu einer oder mehreren wählbaren Positionen der ersten Benutzereingabeeinheit (22, 32) aufweist.

3. Verfahren nach Anspruch 1 oder 2, wobei auf die zustandsbezogenen Funktionen mithilfe einer oder mehreren wählbaren Positionen der ersten Benutzereingabeeinheit (22, 32) in einem Standby-Modus der tragbaren elektronischen Vorrichtung (20, 30) zugegriffen werden kann.

4. Verfahren nach einem der Ansprüche 1 bis 3, wobei der Schritt des Erfassens eines von der Vorrichtung erzeugten Ereignisses das Erfassen eines von der Vorrichtung erzeugten Ereignisses, das eine erste Zustandsänderung bewirkt, aufweist und ferner das Erfassen einer oder mehrerer Ereignisse vom gleichen Typ aufweist, das eine zweite Zustandsänderung bewirkt, wenn keine auf die zustandsbezogene Funktion bezogene Zustandsänderungsvorgänge zwischen zwei erfassten Ereignissen erfasst worden sind.

5. Verfahren nach einem der Ansprüche 1 bis 4, wobei die Prioritätseinstellungen kundenspezifisch, personalisiert oder herstellerspezifisch definiert sein können.

6. Verfahren nach einem der Ansprüche 1 bis 5, wobei die erste Benutzereingabeeinheit ein Joystick ist und ferner ein Schritt der Verbindung zu der Funktion vorhanden ist, die einer Joystickrichtung (Schritt 16) beim Positionieren des Joysticks in der Richtung zugewiesen ist.

7. Verfahren nach einem der Ansprüche 1 bis 6, ferner aufweisend einen Schritt zum Entfernen der Zuweisung der zustandsbezogenen Funktion zu der ersten Benutzereingabeeinheit nach einer bestimmten vordefinierten Zeitspanne.

8. Tragbare elektronische Vorrichtung (20, 30), die eingerichtet ist, eine dynamische Zuweisung einer oder mehreren zustandsbezogenen Funktionen zu der zumindest einen ersten Benutzereingabeeinheit (22, 32) der tragbaren elektronischen Vorrichtung (20, 30) zu ermöglichen, aufweisend:
- einen Satz von Benutzereingabeeinheiten einschließlich einer ersten Benutzereingabeeinheit (22, 32),
- eine Steuereinheit (26), die zumindest an die erste Benutzereingabeeinheit (22, 32) angeschlossen ist,
wobei die Steuereinheit (26) eingerichtet ist, ein Ereignis zu erfassen, das eine Zustandsänderung der Vorrichtung (20, 30) bewirkt, und eine oder mehrere zustandsbezogene Funktionen zu der ersten Benutzereingabeeinheit (22, 32) derart zuzuweisen, dass auf die zustandsbezogene Funktionen mithilfe der ersten Benutzereingabeeinheit (22, 32) zugegriffen sein kann, während es dem Benutzer der Vorrichtung (22, 32) immer noch möglich ist, andere Funktionen zu initiieren, die mithilfe zumindest einer Benutzereingabeeinheit (24, 34) von dem Satz von Benutzereingabeeinheiten auszuführen sind,
**dadurch gekennzeichnet, dass**
die Steuereinheit der tragbaren elektronischen Vorrichtung eingerichtet ist, automatisch eine oder mehrere zustandsbezogene Funktionen zu der ersten Benutzereingabeeinheit (22, 32) in Abhängigkeit von Prioritätseinstellungen derart zuzuweisen,
dass entsprechend der Prioritätenkonfiguration auf die automatisch zugeordneten, zustandsbezogenen Funktionen mithilfe der ersten Benutzereingabeeinheit (22, 32) zugegriffen werden kann.

9. Tragbare elektronische Vorrichtung (20, 30) nach Anspruch 8, in welcher die erste Benutzereingabeeinheit (20, 30) mehrfache auswählbare Positionen aufweist, deren jeder zumindest eine zustandsbezogene Funktion zugewiesen sein kann.

10. Tragbare elektronische Vorrichtung (20, 30) nach Anspruch 8 oder 9, in welcher die erste Benutzereingabeeinheit (22, 32) eine Navigationstaste ist.

11. Tragbare elektronische Vorrichtung (20, 30) nach Anspruch 10, in welcher die Navigationstaste ein Joystick (22, 32) ist.

12. Tragbare elektronische Vorrichtung (20, 30) nach einem der Ansprüche 8-11, wobei die tragbare elektronische Vorrichtung ein Mobiltelefon (30) ist.

13. Computerprogramm-Element aufweisend ein Computerprogrammcode, um einen Computer oder eine Vorrichtung (20, 30) zu veranlassen, wenn der Computerprogrammcode in den Computer oder die Vorrichtung (20, 30) geladen ist, die Schritte des Verfahrens nach einem der Ansprüche 1-7 auszuführen.

14. Computerprogramm-Produkt (42), aufweisend ein Computer lesbares Medium, auf dem:
Computerprogrammcode-Mittel vorhanden sind, um ein Computer oder eine Vorrichtung (20, 30) zu veranlassen, wenn der Computerprogrammcode in den Computer oder die Vorrichtung (20, 30) geladen ist, die Schritte des Verfahrens nach einem der Ansprüche 1-7 auszuführen.

## Revendications

1. Procédé pour permettre une assignation dynamique d'une ou plusieurs fonctions liées à des états à une première unité d'entrée d'utilisateur (22, 32) d'un dispositif électronique portable (20, 30), comprenant les étapes suivantes:
- détecter un événement occasionnant un changement d'état du dispositif (20, 30, étape 12), et
- assigner une ou plusieurs fonctions liées à des états à la première unité d'entrée d'utilisateur (22, 32),
de façon que les fonctions liées à des états soient accessibles par l'intermédiaire de la première unité d'entrée d'utilisateur (22, 32), en permettant néanmoins à l'utilisateur du dispositif (20, 30) de lancer d'autres fonctions à accomplir, en utilisant au moins une unité d'entrée d'utilisateur (24, 34),
**caractérisé en ce que**,
l'étape d'assignation comprend l'assignation automatique d'une ou plusieurs fonctions liées à des états à la première unité d'entrée d'utilisateur (22, 32), sous la dépendance de réglages de priorité (étape 14), lesdits réglages de priorité définissant les fonctions qui ont priorité sur d'autres fonctions, sous la dépendance de l'état du dispositif,
de façon que, conformément auxdits réglages de priorité, les fonctions liées à des états qui sont assignées automatiquement soient accessibles par l'intermédiaire de la première unité d'entrée d'utilisateur (22, 32).

2. Procédé selon la revendication 1, dans lequel l'étape d'assignation (étape 14) comprend en outre l'assignation automatique d'une ou plusieurs fonctions liées à des états à une ou plusieurs positions, pouvant être sélectionnées, de la première unité d'entrée d'utilisateur (22, 32).

3. Procédé selon les revendications 1 ou 2, dans lequel les fonctions liées à des états sont accessibles en utilisant une ou plusieurs positions, pouvant être sélectionnées, de la première unité d'entrée d'utilisateur (22, 32) dans un mode d'attente du dispositif électronique portable (20, 30).

4. Procédé selon l'une quelconque des revendications 1 à 3, dans lequel l'étape de détection d'un événement généré par un dispositif comprend la détection d'un événement généré par un dispositif occasionnant un premier changement d'état, et incluant en outre la détection d'un événement supplémentaire du même type, occasionnant un deuxième changement d'état, si aucune action de changement d'état en relation avec la fonction liée à des états, n'a été détectée entre les deux événements détectés.

5. Procédé selon l'une quelconque des revendications 1 à 4, dans lequel lesdits réglages de priorité peuvent être particularisés, personnalisés ou définis par le fabricant.

6. Procédé selon l'une quelconque des revendications 1 à 5, dans lequel la première unité d'entrée d'utilisateur est un manche à balai, et incluant en outre l'étape de connexion à la fonction à laquelle une direction du manche à balai est assignée (étape 16), si le manche à balai est positionné dans ladite direction.

7. Procédé selon l'une quelconque des revendications 1 à 6, incluant en outre l'étape consistant à supprimer, au bout d'un certain temps prédéfini, l'assignation à la première unité d'entrée d'utilisateur de la fonction liée à des états.

8. Dispositif électronique portable (20, 30) agencé pour permettre une assignation dynamique d'une ou plusieurs fonctions liées à des états à au moins une première unité d'entrée d'utilisateur (22, 32) du dispositif électronique portable (20, 30), comprenant:
- un ensemble d'unités d'entrée d'utilisateur incluant la première unité d'entrée d'utilisateur (22, 32),
- une unité de commande (26) connectée au moins à la première unité d'entrée d'utilisateur (22, 32),
dans lequel l'unité de commande (26) est agencée pour détecter un événement occasionnant un changement d'état du dispositif (20, 30), et pour assigner à la première unité d'entrée d'utilisateur (22, 32) une ou plusieurs fonctions liées à des états, de façon que les fonctions liées à des états soient accessibles par l'intermédiaire de la première unité d'entrée d'utilisateur (22, 32), en permettant néanmoins à l'utilisateur du dispositif (20, 30) de lancer d'autres fonctions à accomplir en utilisant au moins une unité d'entrée d'utilisateur (24, 34) dudit ensemble d'unités d'entrée d'utilisateur,
**caractérisé en ce que**
l'unité de commande du dispositif électronique portable est agencée pour assigner automatiquement une ou plusieurs fonctions liées à des états à la première unité d'entrée d'utilisateur (22, 32), sous la dépendance de réglages de priorité,
de façon que, conformément auxdits réglages de priorité, les fonction liées à des états, qui sont assignées automatiquement, soient accessibles par l'intermédiaire de la première unité d'entrée d'utilisateur (22, 32).

9. Dispositif électronique portable (20, 30) selon la revendication 8, dans lequel la première unité d'entrée d'utilisateur (20, 30) a de multiples positions pouvant être sélectionnées, à chacune desquelles peut être assignée au moins une fonction liée à des états.

10. Dispositif électronique portable (20, 30) selon les revendications 8 ou 9, dans lequel la première unité d'entrée d'utilisateur (22, 32) est une touche de navigation.

11. Dispositif électronique portable (20, 30) selon la revendication 10, dans lequel la touche de navigation est un manche à balai (22, 32).

12. Dispositif électronique portable (20, 30) selon l'une quelconque des revendications 8-11, dans lequel le dispositif électronique portable est un téléphone mobile (30).

13. Elément de programme informatique comprenant un code de programme informatique pour faire exécuter à un ordinateur ou un dispositif (20, 30), lorsque ledit code de programme informatique est chargé dans l'ordinateur ou le dispositif (20, 30), les étapes du procédé conforme à l'une quelconque des revendications 1 à 7.

14. Produit - programme informatique (42) comprenant un support lisible par ordinateur, sur lequel se trouve :
une structure de code de programme informatique, pour faire exécuter à un ordinateur ou un dispositif (20, 30), lorsque cette structure de code de programme est chargée dans l'ordinateur ou le dispositif (20, 30), les étapes du procédé conforme à l'une quelconque des revendications 1 à 7.
